Europäisches Patentamt

European Patent Office

Office européen des brevets

(19)

(11) Veröffentlichungsnummer: **0 278 050 B1**

(12) **EUROPÄISCHE PATENTSCHRIFT**

(45) Veröffentlichungstag der Patentschrift: **08.05.91**

(51) Int. Cl.⁵: **F16L 59/16**

(21) Anmeldenummer: **87114395.4**

(22) Anmeldetag: **02.10.87**

(54) **Muffenverbindung für wärmeisolierte Leitungsrohre.**

(30) Priorität: **30.01.87 DE 3702726**

(43) Veröffentlichungstag der Anmeldung:
**17.08.88 Patentblatt 88/33**

(45) Bekanntmachung des Hinweises auf die
Patenterteilung:
**08.05.91 Patentblatt 91/19**

(84) Benannte Vertragsstaaten:
**AT BE CH DE ES FR GB GR IT LI NL SE**

(56) Entgegenhaltungen:
**EP-A- 0 075 901        EP-A- 0 164 323**
**WO-A-84/03346        DE-A- 1 939 166**
**DE-U- 1 849 053        DE-U- 3 505 890**
**DE-U- 8 204 372        DE-U- 8 427 320**
**FR-A- 2 535 570**

(73) Patentinhaber: **kabelmetal electro GmbH**
**Kabelkamp 20 Postfach 260**
**W-3000 Hannover 1(DE)**

(72) Erfinder: **Friessner, Jürgen, Dipl.-Ing.**
**Hirschdamm 11**
**W-3002 Wedemark 2(DE)**
Erfinder: **Szczepanek, Werner, Dipl.-Ing.**
**Hindemithweg 15**
**W-3203 Sarstedt(DE)**

**Beschreibung**

Die Erfindung betrifft eine Anordnung zum Nachisolieren der Verbindungsstelle zweier wärmeisolierter Leitungsrohre, die aus einem mediumführenden Innenrohr, vorzugsweise aus Stahl, einer das Innenrohr umgebenden Wärmeisolationsschicht aus aufgeschäumtem Kunststoff, vorzugsweise Polyurethan und einem Außenrohr aus einem Kunststoff bestehen, bei welcher um die Verbindungsstelle der von Schaumstoff befreiten miteinander verschweißten Innenrohrenden ein Kunststoffband derart herumgelegt ist, daß es auf den Mantelrohrenden aufliegt und seine Bandkanten überlappen, wobei zum Nachisolieren das Kunststoffband zwecks Bildung einer Muffenverbindung sowohl im Bereich seiner überlappenden Bandkanten als auch mit den Mantelrohrenden mittels zumindest eines beheizbaren Drahtes verschweißt und der Ringraum zwischen den Innenrohrenden und der Muffe ausgeschäumt wird.

Eine solche Anordnung ist aus dem DE-U- 82 04 372 bekannt. Als nachteilig bei der dort beschriebenen Anordnung hat sich herausgestellt, daß eine gleichmäßige Verteilung der durch die Spannvorrichtung aufgebrachten Kräfte im Bereich der Schweißnähte nicht möglich war, insbesondere bei Kunststoffbändern mit großer Wanddicke, so daß als Folge davon die Heizdrähte aus den Schweißnähten herausgedrückt wurden und eine einwandfreie Schweißnaht nicht oder nur mit zusätzlichem Aufwand erzielbar war.

In der FR-A-2 535 570 ist eine Anordnung beschrieben, wie sie aus dem vorgenannten DE-U- 82 04 372 bekannt ist. In Figur 4 und 5 ist die fertige Muffenverbindung nach dem Verschweißen des Kunststoffbandes im Bereich seiner überlappenden Bandkanten und mit dem Außenrohr und nach dem Ausschäumen dargestellt. Durch die während des Schweißvorgangs erforderlichen in radialer Richtung wirkenden Kräfte ist das Kunststoffband im Bereich seiner überlappenden Bandkanten derart verformt, daß die Bandkanten abgeschrägt zum Bandende verlaufen. Beim Schweißvorgang kann es geschehen, daß die Heizdrähte durch den fließenden Kunststoff verlagert werden und wie oben erwähnt aus den Schweißnähten herausgedrückt werden.

Der Erfindung liegt von daher die Aufgabe zugrunde, die Anordnung der eingangs erwähnten Art dahingehend zu verbessern, daß eine gleichmäßigere Druckverteilung möglich wird und einwandfreie Schweißnähte ohne zusätzlichen Mehraufwand herstellbar sind.

Diese Aufgabe wird bei einer Anordnung der eingangs erwähnten Art dadurch gelöst, daß das Kunststoffband in Richtung der Überlappungsnaht gesehen durch Abschrägungen an zwei Längskanten des Kunststoffbandes einen im wesentlichen trapezförmigen Querschnitt aufweist, daß der Überlappungsbereich so breit ist, daß die Abschrägungen an den Längskanten unter und oberhalb von Bereichen des Kunststoffbandes mit voller Wanddicke gelegen sind und der die Verschweißung bewirkende beheizbare in an sich bekannter Weise mäanderförmig geformte Draht innerhalb einer an der der Abschrägung gegenüberliegenden Oberfläche eingebrachten Nut angeordnet ist, die im Bereich der vollen Wanddicke des Kunststoffbandes gelegen ist.

Durch die von einer Seite in das Kunststoffband angebrachten Abschrägungen entsteht ein sanfter Übergang im Bereich der Überlappungnaht, der eine gleichmäßige Druckverteilung möglich macht. Das Anbringen der Abschrägungen von einer Seite des Kunststoffbandes vereinfacht die Herstellung des Bandes, da bei der Anbringung der Abschrägungen das Kunststoffband nicht gewendet werden muß.

Nach einer vorteilhaften Ausgestaltung der Erfindung schließen die Abschrägungen mit der Kunststoffbandebene einen Winkel zwischen 1 und 15°, vorzugsweise zwischen 2 und 5° ein. Diese Winkelmaße haben sich als optimal für die Druckverteilung ergeben.

In der Praxis hat sich eine Breite der Überlappungsnaht von mindestens 50 mm als vorteilhaft erwiesen. Diese Breite ist weitestgehend unabhängig vom Durchmesser der gebildeten Muffe. Sie ist allerdings anhängig von der Wanddicke des Kunststoffbandes. Wird für Muffen mit großem Durchmesser eine größere Wanddicke des Kunststoffbandes erforderlich, folgt daraus zwangsläufig eine größere Breite der Überlappungsnaht. Maßabweichungen der Außenrohrdurchmesser der Rohrleitungen machen unter Umständen eine größere Breite der Überlappungsnaht erforderlich.

Die Abschrägungen werden vorteilhafterweise durch spanende Bearbeitung, vorzugsweise durch Fräsen erzeugt, und zwar zweckmäßigerweise gleichzeitig an beiden Längskanten.

Aus mechanischen Gründen hat es sich als sinnvoll erwiesen, daß die Abschrägungen nicht spitz auslaufen, sondern daß sie an ihren auslaufenden Enden eine Mindestwanddicke von 0,2 mm, vorzugsweise 0,5 mm aufweisen. Eine nennenswerte Beschädigung der Längskanten ist damit ausgeschlossen.

Für eine einwandfreie Verschweißung der in Umfangsrichtung verlaufenden Schweißnähte ist es von Vorteil, daß in die der Oberfläche der Außenrohre zugekehrte Oberfläche des Kunststoffbandes an den von den die Überlappungsnaht bildenden Längskanten verschiedenen Längskanten je eine den Draht bzw. die Drähte aufnehmende Nut eingebracht ist, die unter einem spitzen Winkel und im Abstand zu den gesagten Längskanten verlaufen, und daß die Enden der Nut bei dem zur Muffe geformten Kunststoffband einander zumindest teilweise überdecken. Hierdurch wird sichergestellt, daß die in Umfangsrichtung verlaufende Schweißnaht auch im Bereich der Überlappungsnaht einwandfrei ist, wenn z.B. durch Maßabweichungen der Außenrohrenden, wie Exzentrizität, Durchmesserschwankungen, Unrundheit u.a. eine kegelstumpfartige Ausbildung der Muffe auftritt.

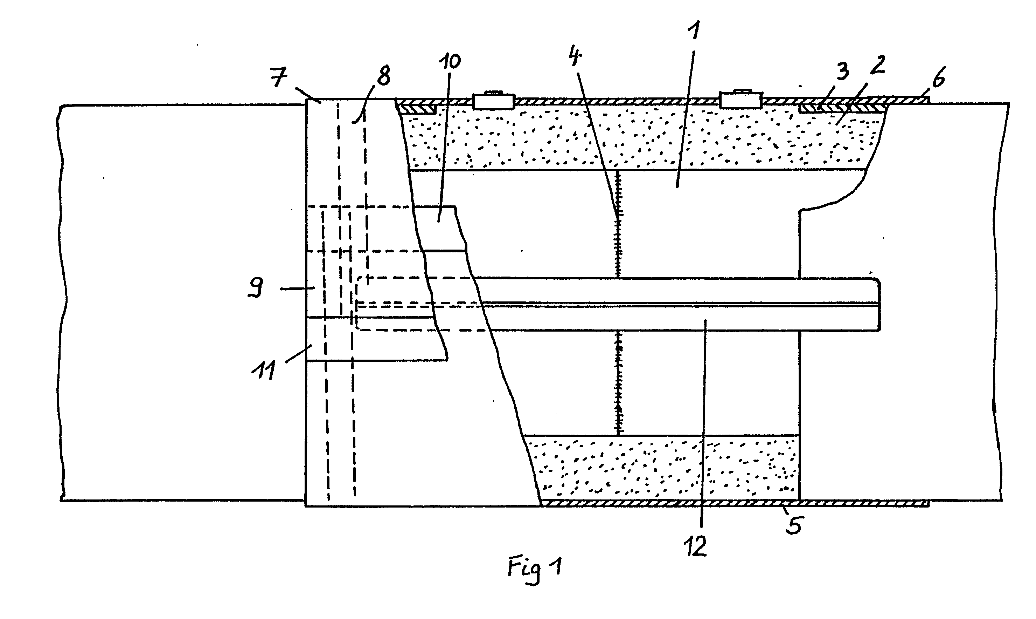

Die Erfindung ist anhand der in den Figuren 1 bis 3 schematisch dargestellten Ausführungsbeispiele näher erläutert.

In der Figur 1 ist das Innenrohr 1 von einer Wärmeisolationsschicht 2 und einem Außenmantel 3 aus thermoplastischem Kunststoff, z.B. Polyethylen umgeben. Nachdem die Verbindungsnaht 4 für die Innenrohre 1 hergestellt ist, wird um die Verbindungsstelle ein Kunststoffband 5 aus Polyethylen zur Muffe geformt, wobei die Längskanten 6 und 7 des Kunststoffbandes auf den Enden der Außenrohre 3 aufliegen. In die dem Außenrohr 3 zugekehrte Oberfläche des Kunststoffbandes 5 ist endseitig eine Nut 8 eingefräst, die unter einem spitzen Winkel von wenigen Graden zur Längskante 6 bzw. 7 des Kunststoffbandes 5 verläuft. In diese Nut 8 ist in nicht dargestellter Weise ein Heizelement, vorzugsweise ein mäanderartig geformter in einer Kunststofffolie eingebetteter Heizleiter eingelegt, das für eine Verschweißung der Endbereiche des Kunststoffbandes 5 mit dem Außenrohr 3 sorgt. Durch den spitzwinkligen Verlauf der Nut 8 ergibt sich nach dem Formen des Kunststoffbandes 5 zum Muffenrohr eine Überlappung der Enden der Nut 8, die in diesem Bereich eine gute Verschweißung, auch bei unrunden oder nicht zylindrischen Muffen sicherstellt.

Das Kunststoffband 5 wird mit einem Überlappungsbereich 9 von in etwa 150 mm Breite zum Muffenrohr geformt. Damit der durch nichtdargestellte Mittel, z.B. eine Manschette bzw. eine Vielzahl von Spannbändern aufgebrachte Druck, der für eine dichte Schweißnaht erforderlich ist, gleichmäßig verteilt wird, weist das Kunststoffband 5 an zwei Längskanten Abschrägungen 10 und 11 auf, wie weiter unten beschrieben. Parallel und im Abstand zu einer dieser Abschragungen ist, wie in Figur 3 gezeigt, eine Nut in die Oberfläche des Kunststoffbandes 5 eingefräst, in welche ebenfalls ein nicht dargestelltes Heizelement eingelegt ist. Der Heizleiter des Heizelementes verläuft in einer Länge in der Nut 8 beginnend über die im Überlappungsbereich 9 gelegene Nut bis in die der Nut 8 entsprechende nicht dargestellte Nut im Bereich der Längskante 6. Bei Muffen mit in unterschiedliche Schweißzonen aufgeteilten Heizelementen sind selbstredend mehrere Einzellängen erforderlich.

Werden die Enden des Heizleiters nun an eine Spannungsquelle angeschlossen, erwärmt sich der Heizleiter und schmilzt das angrenzende Kunststoffmaterial des Kunststoffbandes 5 und des Außenrohres 3 auf, wodurch sich bei Anwendung von Druck eine Verschweißung der angrenzenden Schichten ergibt. Als Gegenlager für den Druck im Bereich der Überlappungsnaht 9 dient ein Stützprofil 12, welches sich auf den Außenrohrenden 3 bzw. der Isolationsschicht 2 abstützt.

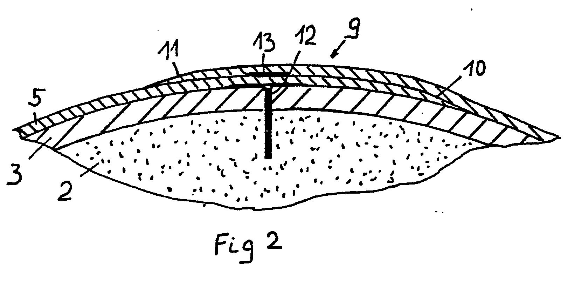

In der Figur 2 ist ein Teilausschnitt der Figur 1 im Querschnitt dargestellt. Hieran wird deutlich, daß durch die Abschrägungen 10 und 11 ein nahezu kreisförmiger Querschnitt der Muffe erreicht wird. Der mit 13 bezeichnete Heizleiter liegt oberhalb des Stützprofils 12 im Überlappungsbereich 9 und ist beidseitig, d.h. oberhalb und unterhalb von der vollen Wanddicke des Kunststoffbandes 5 umgeben. Ein "Wandern" des Heizleiters 13 in Umfangsrichtung ist durch die gleichmäßige Druckverteilung vermieden.

Die Figur 3 zeigt eine die Überlappungsnaht 9 bildende Längskante des Kunststoffbandes 5 mit der angefrästen Abschrägung 11. An der parallel verlaufenden Längskante ist die Abschrägung 10 angefräst, so daß sich ein trapezförmiger Querschnitt des Kunststoffbandes 5 ergibt. Beide Abschrägungen 10 und 11 verlaufen unter einem Winkel $\alpha$ von 2 bis 5° zur Hauptebene des Kunststoffbandes 5. Sie laufen aber nicht spitz aus, sondern es verbleibt ein Endbereich 14, der eine Mindestwanddicke von 1 mm aufweisen sollte, um Beschädigungen in diesen Endbereichen auszuschließen. In die der Abschrägung 11 gegenüberliegende Oberfläche des Kunststoffbandes 5 ist eine Nut 15 eingefräst, in welche das Heizelement mit dem Heizleiter 13 eingelegt wird.

Die Abmessungen eines Kunststoffbandes 5 sind beispielsweise:

| | |
|---|---|
| Werkstoff: | Polyethylen |
| Wanddicke: | 4 mm |
| $\alpha$ : | 3,5° |
| Endbereich 14: | 1 mm |
| Breite der Nuten: | 30 mm |
| Tiefe der Nuten: | 0,8 mm |

EP 0 278 050 B1

Breite und Länge des Kunststoffbandes sind abhängig von den Abmessungen der mit der Muffe zu verbindenden Rohrleitung.

## Ansprüche

1. Anordnung zum Nachisolieren der Verbindungsstelle zweier wärmeisolierter Leitungsrohre, die aus einem mediumführenden Innenrohr, vorzugsweise aus Stahl, einer das Innenrohr umgebenden Wärmeisolationsschicht aus aufgeschäumtem Kunststoff, vorzugsweise Polyurethan und einem Außenrohr aus einem Kunststoff bestehen, bei welcher um die Verbindungsstelle der von Schaumstoff befreiten miteinander verschweißten Innenrohrenden ein Kunststoffband derart herumgelegt ist, daß es auf den Mantelrohrenden aufliegt und seine Bandkanten überlappen, wobei zum Nachisolieren das Kunststoffband zwecks Bildung einer Muffenverbindung sowohl im Bereich seiner überlappenden Bandkanten als auch mit den Mantelrohrenden mittels zumindest eines beheizbaren Drahtes verschweißt und der Ringraum zwischen den Innenrohrenden und der Muffe ausgeschäumt wird, dadurch gekennzeichnet, daß das Kunststoffband (5) in Richtung der Überlappungsnaht (9) gesehen durch Abschrägungen (10,11) an zwei Längskanten des Kunststoffbandes (5) einen im wesentlichen trapezförmigen Querschnitt aufweist, daß der Überlappungsbereich (9) so breit ist, daß die Abschrägungen (10,11) an den Längskanten unter und oberhalb von Bereichen des Kunststoffbandes (5) mit voller Wanddicke gelegen sind und der die Verschweißung bewirkende beheizbare in an sich bekannter Weise mäanderförmig geformte Draht (13) innerhalb einer an der der Abschrägung gegenüberliegenden Oberfläche eingebrachten Nut (15) angeordnet ist, die im Bereich der vollen Wanddicke des Kunststoffbandes (5) gelegen ist.

2. Anordnung nach Anspruch 1, dadurch geskennzeichnet, daß die Abschrägungen (10,11) mit der Kunststoffbandebene einen Winkel zwischen 1 und 15°, vorzugsweise zwischen 2 und 5° einschließen.

3. Anordnung nach Anspruch 1 oder 2, dadurch gekennzeichnet, daß die Breite der Überlappung (9) mindestens 50 mm beträgt.

4. Anordnung nach einem der Ansprüche 1-3, dadurch gekennzeichnet, daß die Abschrägungen (10,11) eben und durch spanende Bearbeitung, vorzugsweise durch Fräsen, hergestellt sind.

5. Anordnung nach einem der Ansprüche 1-4, dadurch gekennzeichnet, daß die Abschrägungen (10,11) an ihren Enden (14) eine Mindestwanddicke von 0,2 mm, vorzugsweise von 0,5 mm aufweisen.

6. Anordnung nach einem der Ansprüche 1-5, dadurch gekennzeichnet, daß in die der Oberfläche der Außenrohre (3) zugekehrte Oberfläche des Kunststoffbandes (5) an den von den die Überlappungsnaht (9) bildenden Längskanten verschiedenen Längskanten (6,7) je eine den Draht (13) bzw. die Drähte aufnehmende Nut (8) eingebracht ist, die unter einem spitzen Winkel und im Abstand zu den besagten Längskanten (6,7) verlaufen, und daß die Enden der Nut (8) bei dem zur Muffe geformten Kunststoffband (5) einander überdecken.

## Claims

1. Arrangement for post-insulating the joint of two heat-insulated line pipes, which comprise a medium-carrying inner pipe, preferably of steel, a heat-insulation layer of foamed plastic, preferably polyurethane, surrounding the inner pipe, and an outer pipe of a plastic, in which a plastic tape is laid around the joint of the welded-together ends of the inner pipe, stripped of foam, in such a way that the said tape rests on the ends of the encasing pipe and its tape edges overlap, the plastic tape being welded by means of at least one heatable wire for the purpose of post-insulating, in order to form a socket connection, both in the region of its overlapping tape edges and to the ends of the encasing pipe, and the annular space between the ends of the inner pipe and the socket being foam-filled, characterised in that the plastic tape (5) has, seen in the direction of the overlap seam (9), an essentially trapezoidal cross-section due to bevels (10, 11) on two longitudinal edges of the plastic tape (5), in that the region of overlap (9) is so wide that the bevels (10, 11) on the longitudinal edges are situated below and above

4

regions of the plastic tape (5) of full wall thickness and the heatable wire (13), effecting the welding and shaped in a way known per se in the form of a meander, is arranged inside a groove (15) which is made on the surface opposite the bevel and is situated in the region of full wall thickness of the plastic tape (5).

2. Arrangement according to Claim 1, characterised in that the bevels (10, 11) form with the plane of the plastic tape an angle between 1 and 15°, preferably between 2 and 5°.

3. Arrangement according to Claim 1 or 2, characterised in that the width of the overlap (9) is at least 50 mm.

4. Arrangement according to one of Claims 1 - 3, characterised in that the bevels (10, 11) are plane and produced by machining, preferably by milling.

5. Arrangement according to one of Claims 1 - 4, characterised in that the bevels (10, 11) have at their ends (14) a minimum wall thickness of 0.2 mm, preferably of 0.5 mm.

6. Arrangement according to one of Claims 1 - 5, characterised in that in the surface of the plastic tape (5) facing the surface of the outer pipes (3) there is a groove (8) made in each case on the longitudinal edges (6, 7) other than the longitudinal edges forming the overlap seam (9), which groove or grooves receive the wire (13) or wires and run at an acute angle and at a distance from the said longitudinal edges (6, 7), and in that the ends of the groove (8) cover each other when the plastic tape (5) is shaped to form the socket.

## Revendications

1. Arrangement pour isoler le point de jonction de deux tubes conducteurs isolés calorifiquement qui comportent un tube interne en matériau conducteur, de préférence en acier, une couche isolant la chaleur entourant le tube interne, en mousse de matière plastique de préférence en polyuréthane et un tube externe en matière plastique,
dans lequel une bande de matière plastique est disposée autour du point de jonction dont les tubes internes ont été soudés et débarrassés de leur mousse de plastique de façon qu'elle s'applique sur les extrémités des gaines des tubes et que ses bords se recouvrent,
et dans lequel pour réaliser l'isolation, la bande de matière plastique formant ainsi un manchon est soudée aussi bien dans la région où ses bords se recouvrent qu'avec les extrémités de la gaine des tubes à l'aide d'au moins un fil chauffant et l'espace annulaire entre les extrémités des tubes internes et le manchon est rempli de mousse,
caractérisé en ce que la bande de matière plastique (5) vue dans la direction de la soudure du recouvrement (9) présente sur deux bords longitudinaux de la bande (5) des chanfreins (10,11) de section essentiellement trapézoïdale,
en ce que la zone de recouvrement (9) a une largeur telle que les chanfreins (10,11) soient disposés le long des bords longitudinaux au-dessous et au-dessus des régions de la bande (5) ayant une pleine épaisseur de paroi et telle que le fil chauffant (13) formant de façon connue des méandres et servant au soudage soit disposé dans une encoche (15) située dans la surface opposée au chanfrein, ladite encoche (15) étant disposée dans la région de la bande (5) de pleine épaisseur de paroi.

2. Arrangement selon la revendication 1 caractérisé en ce que les chanfreins (10,11) forment avec le plan de la bande un angle compris entre 1 et 15° et de préférence entre 2 et 5°.

3. Arrangement selon l'une des revendications 1 ou 2 caractérisé en ce que la largeur du recouvrement (9) est d'au moins 50 mm.

4. Arrangement selon l'une des revendications 1 à 3 caractérisé en ce que les chanfreins (10,11) sont fabriqués en retirant des copeaux de préférence par fraisage.

5. Arrangement selon l'une des revendications 1 à 4 caractérisé en ce que les chanfreins (10,11) présentent à leurs extrémités (14) une épaisseur de paroi minimale de 0,2 mm de préférence 0,5 mm.

6. Arrangement selon l'une des revendications 1 à 5 caractérisé en ce qu'une encoche (8) contenant le fil (13) ou les fils est disposée dans la surface de la bande (5) en regard des tubes externes (3), près de chacun des bords longitudinaux (6,7) et à partir des bords formant le recouvrement (9), ladite encoche (8) courant le long desdits bords (6,7) et en faisant un angle aigu avec ceux-ci et en ce que les extrémités de l'encoche (8) se recouvrent l'une l'autre grâce à la bande (5) formant le raccord.

Fig 1

EP 0 278 050 B1

Fig 2